# FASCICULE DE BREVET EUROPEEN

(11) **EP 1 432 534 B1**
(45) Date de publication et mention de la délivrance du brevet: **30.07.2008**
(21) Numéro de dépôt: 01969124.5
(22) Date de dépôt: 03.10.2001
(51) Int. Cl.: B08B 9/027, C02F 5/08, C23F 11/18, F24D 19/00

(54) **PROCEDE DE TRAITEMENT CONTRE LA CORROSION ET LES DEPOTS DANS DES INSTALLATIONS D'EAU SANITAIRE ET APPAREIL POUR LA MISE EN OEUVRE DU PROCEDE**
VERFAHREN ZUM AUFBEREITEN VON KORROSION UND ABLAGERUNGEN IN EINER BRAUCHWASSERANLAGE UND VORRICHTUNG ZUR DURCHFÜHRUNG DES VERFAHRENS
METHOD FOR TREATMENT AGAINST CORROSION AND DEPOSITIONS IN DOMESTIC SUPPLY WATER INSTALLATIONS AND APPARATUS THEREFOR

(43) Date de publication de la demande: 30.06.2004
(73) Titulaire: Descloux, Pierre, 1292 Chambésy (DE)
(72) Inventeur: Descloux, Pierre, 1292 Chambésy (DE)
(74) Mandataire: Reuteler, Raymond Werner
(86) Numéro de dépôt international: PCT/CH2001/000595
(87) Numéro de publication internationale: WO 2003/028910

(56) Documents cités:
- DE-A- 10 060 164
- DE-A- 19 755 622

## Description

La présente invention concerne un procédé de traitement contre la corrosion, l'oxydation et les dépôts dans des installations et des circuits de circulation d'eau sanitaire ainsi qu'un appareil de mise en oeuvre du procédé.

On connaît à ce jour un certain nombre de procédés de nettoyage chimique des surfaces internes de conteneurs de stockage et/ou de tubages de circulation de fluide en métal, permettant de détruire la corrosion, l'oxydation ainsi que d'autres types de dépôts tels que le tartre après constat de leur formation.

De façon générale, ces procédés comprennent une étape préliminaire de diagnostic de la formation de ces corrosions, oxydations et dépôts soit par analyse de certains éléments chimiques contenus dans le fluide stocké ou circulé, soit par découpe par exemple d'une partie du tubage à nettoyer pour analyser la nature et la proportion des différents dépôts formés ainsi que la nature des parois de la partie de tubage découpée, comme décrit dans le brevet CH 640 434. En fonction des analyses effectuées, la composition d'un produit de traitement destructif susceptible de détruire les dépôts constatés tel qu'une solution de dissolution ou de désoxydation et divers paramètres relatifs aux conditions de sa circulation tels que sa température, son débit et la durée du traitement destructif sont déterminés.

L'étape de diagnostic précitée nécessite l'intervention d'un technicien sanitaire pour la découpe d'une partie du tubage à nettoyer ainsi que l'intervention d'un chimiste pour les diverses analyses à effectuer, tant au niveau du fluide stocké ou circulé qu'au niveau des parois de la partie de tubage découpée.

En outre, selon les divers procédés de l'art antérieur, l'étape de mise en oeuvre du nettoyage chimique par circulation d'un produit de traitement destructif dans une installation sur laquelle une formation de dépôts a été constatée doit être précédée et suivie de plusieurs étapes consommatrices de temps, complexes et dont la mise en oeuvre nécessite de faire appel à des personnes présentant de bonnes compétences dans divers domaines techniques.

Ainsi, la circulation du produit de traitement implique au préalable une étape de vidange, généralement par purge et rinçage, de par exemple une section de tubage à nettoyer. Cette étape de vidange doit être suivie d'une étape de constitution d'une voie fermée comprenant par exemple la section de tubage à nettoyer, une pompe et un filtre pour l'alimentation en produit de traitement et des moyens de mesure de pression et de chauffage pour contrôler les conditions de circulation du produit de traitement.

Après la circulation du produit de traitement, il est nécessaire de prévoir une étape de circulation de solution de neutralisation pour neutraliser les effets de la solution de dissolution ou de désoxydation, éventuellement une étape de circulation d'un enduit protecteur pour former une couche protectrice sur les surfaces ou parois internes des conteneurs ou tubages nettoyés, une étape de déconnexion de la voie fermée constituée, une étape de reconnexion de la section de tubage nettoyée sur le circuit de circulation de fluide et une étape de remise en fluide de la section nettoyée.

Les procédés de l'art antérieur sont tous des procédés de traitement destructif qui sont mis en oeuvre après constat de la formation de dépôts. C'est-à-dire qu'il s'agit de procédés purement ponctuels, mis en oeuvre au coup par coup et n'apportant une solution de long terme ni en termes de destruction des dépôts formés, ni en termes de prévention de leur formation.

En outre, le déclenchement de la mise en oeuvre du traitement destructif après constat de la formation de dépôts n'interviendra dans la plupart des cas qu'après que les installations concernées ont fait l'objet d'une défaillance de fonctionnement ou sont tombées en panne. Ces installations subiront par conséquent des perturbations dans leur fonctionnement d'une part avant le constat d'une défaillance ou d'une panne du fait d'un rendement de fonctionnement diminué par l'accumulation progressive des dépôts et d'autre part au moment de ce constat, du fait des interruptions de fonctionnement répétées dues aux défaillances ou pannes. Qui plus est, le choix du moment opportun pour déclencher un traitement destructif, si possible avant la survenue d'une défaillance ou d'une panne, repose nécessairement sur une subjectivité humaine élevée puisque aucune possibilité d'avertissement du degré d'accumulation des dépôts n'est prévue.

La demande DE 100 60 164 décrit un procédé selon le préambule de la revendication 1 ainsi qu'un dispositif selon le préambule de la revendication 10.

L'invention vise à remédier aux inconvénients des procédés de traitement existants, et notamment à réduire les interventions de traitement destructif et en particulier à éviter des interruptions de l'utilisation d'une installation d'eau sanitaire dans un bâtiment.

Il est avantageux de fournir un procédé de traitement d'eau chaude et d'eau froide fiable, dont la durée de vie d'un circuit d'eau de circulation sanitaire est élevée, et qui permet des contrôles sans interruption du circuit d'eau sanitaire.

Il est avantageux de fournir un groupe de traitement pour la mise en oeuvre d'un procédé de traitement qui peut être installé sur une installation d'eau sanitaire d'un bâtiment neuf ou ancien et qui augmente la durée de l'installation sanitaire.

Il est avantageux de fournir un groupe de traitement qui réduit le temps d'intervention pour des contrôles ou lors de pannes de l'installation.

Des buts de l'invention sont réalisés par un procédé de traitement selon la revendication 1. Un dispositif pour la mise en oeuvre du procédé de traitement étant décrit dans la revendication 10, et l'utilisation du dispositif dans un bâtiment comprenant un circuit de circulation d'eau sanitaire étant décrite dans la revendication 14.

Dans la présente invention, un procédé de traitement préventif de la corrosion, de l'oxydation et/ou de dépôts dans des circuits de circulation d'eau sanitaire comprend les étapes de :
- diagnostic comportant une analyse d'éléments chimiques de l'eau circulant dans ledit circuit par prélèvement d'eau circulant dans ledit circuit; et
- traitement préventif de la corrosion, de l'oxydation et/ou de dépôts dudit circuit d'eau sanitaire par la mise en service d'un groupe de traitement injectant un produit de traitement,
dans lequel,
- l'étape de diagnostic comporte une analyse de l'état de corrosion, de l'oxydation et de dépôts du circuit de circulation d'eau sanitaire, et dans lequel le groupe de traitement mesure le débit d'eau entrant dans le circuit de circulation d'eau sanitaire ,
   et dans lequel le produit de traitement comprend des silicates, la quantité de produit injecté étant proportionnelle au volume d'eau entrant dans le circuit de circulation d'eau sanitaire ainsi qu'à la quantité d'éléments chimiques de l'eau circulant dans ledit circuit relevée lors de la phase de diagnostic, la quantité maximum de produit injecté ne dépassant pas une valeur fixée par les normes alimentaires.

Dans la présente invention, un dispositif pour la mise en oeuvre du procédé de traitement préventif de la corrosion, de l'oxydation et ou de dépôts dans des circuits de circulation d'eau sanitaire comprenant :
- des moyens d'analyse d'éléments chimiques de l'eau circulant dans le circuit,
- un groupe de traitement d'eau sanitaire comprenant des moyens pour injecter un produit de traitement et un réservoir pour contenir un produit de traitement,
caractérisé en ce qu'il comprend des moyens d'analyse de l'état de corrosion, de l'oxydation et de dépôts du circuit de circulation d'eau sanitaire,
et en ce que le groupe de traitement d'eau sanitaire comprend en outre un dispositif de mesure de débit convenant pour être monté sur une entrée d'eau d'un circuit de circulation d'eau sanitaire d'un bâtiment, une pompe avec unité de commande connectée électriquement au dispositif de mesure de débit et un tube d'alimentation du produit de traitement convenant pour être connecté à un point de connexion avec le circuit de circulation d'eau sanitaire, la pompe avec unité de commande étant réglée de manière à pouvoir injecter le produit de traitement selon une quantité proportionnelle au volume d'eau entrant dans le circuit de circulation d'eau sanitaire, la quantité maximum de produit de traitement injecté étant inférieure à une valeur limite fixées par les normes alimentaires et de santé.

Avantageusement, le procédé selon l'invention augmente la durée de vie du circuit d'eau sanitaire en réduisant ou en éliminant la nécessité d'un traitement destructif, tout en permettant une utilisation continue du circuit d'eau sanitaire.

Le circuit de circulation d'eau sanitaire peut avantageusement comporter des dispositifs de contrôle disposés en début de circuit et également en fin de circuit, le dispositif de contrôle comprenant une vanne by-pass et un tube témoin connecté en dérivation autour de la vanne by-pass et permettant le contrôle et visuel et chimique des dépôts dans les tubes témoins. Les tubes témoins sont en des matériaux similaires aux tubes du circuit de circulation d'eau du bâtiment. Des vannes positionnées aux extrémités des tubes témoins et la vanne by-pass permettent d'enlever les tubes témoins sans interruption du circuit d'eau circulant dans le bâtiment.

Dans la présente invention, le groupe de traitement d'eau sanitaire comprend un dispositif de mesure de débit monté sur une entrée d'eau d'un circuit de circulation d'eau sanitaire d'un bâtiment, un réservoir contenant un produit de traitement, une pompe avec unité de commande connectée électriquement au dispositif de mesure du débit et un tube d'alimentation du produit de traitement connecté à un point de connexion avec le circuit de circulation d'eau sanitaire. Le groupe de traitement est réglé de manière à injecter le produit de traitement essentiellement proportionnellement au volume d'eau entrant dans le circuit de circulation d'eau sanitaire, à un dosage inférieur aux limites fixés par des normes alimentaires.

Le tube d'alimentation du produit de traitement est connecté au circuit de circulation d'eau à une position intermédiaire entre un échangeur de chaleur, quand il s'agit d'un circuit de circulation d'eau chaude, et un dispositif de contrôle comprenant un tube témoin qui peut être démonté pour l'analyse de la corrosion et des dépôts dans le tubage. Un thermostat positionné à la sortie de l'échangeur de chaleur permet de maintenir la température d'eau chaude à environ 60°C ou moins, afin de réduire un éventuel effet de cristallisation du produit de traitement et ainsi assurer une bonne répartition sur le tubage du circuit.

Le groupe de traitement peut comprendre un dispositif de mesure de débit comprenant un compteur à impulsions. Après l'entrée dans le circuit de circulation d'eau sanitaire d'un un volume d'eau spécifié, une impulsion envoyée par le dispositif de mesure de débit à la pompe commande l'injection d'une quantité spécifiée du produit de traitement dans le circuit de circulation d'eau. Une vanne anti-retour est disposée dans le tube d'alimentation du produit de traitement à une certaine distance de sa connexion avec le circuit d'eau, pour éviter une cristallisation du produit de traitement en raison d'une température trop élevée provoquée par la chaleur du circuit d'eau chaude.

D'autres caractéristiques, buts et avantages de l'invention ressortiront des revendications, de la description et du dessin annexé, dans lequel :

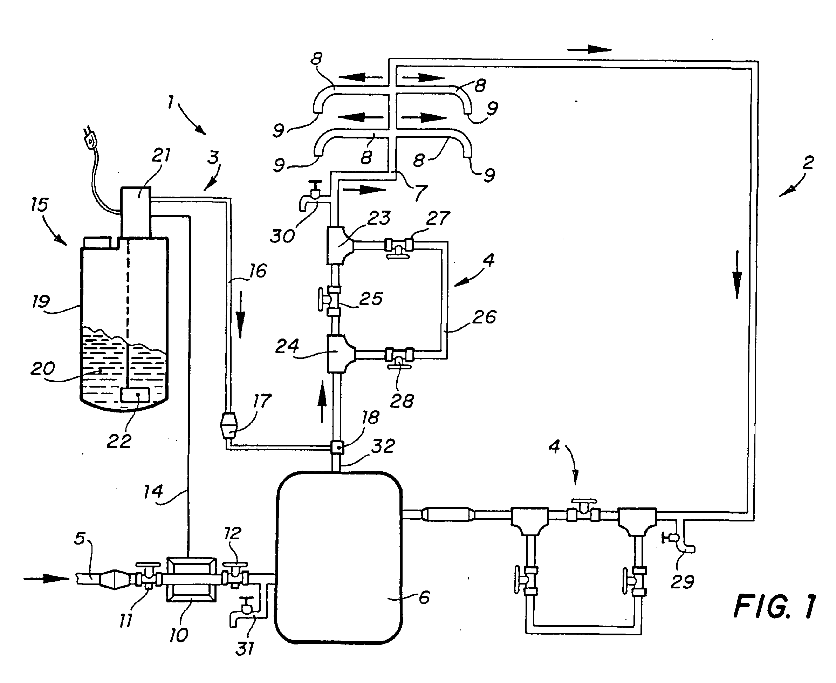

la Fig. 1 est un schéma général d'un circuit de circulation d'eau sanitaire d'un bâtiment comprenant une installation de traitement d'eau sanitaire selon la présente invention.

Comme représenté sur la Fig. 1, une installation d'eau sanitaire 1 d'un bâtiment comprend un circuit de circulation d'eau sanitaire 2, un groupe de traitement 3 et un ou plusieurs dispositifs de contrôle 4.

Le circuit de circulation d'eau sanitaire 2 comprend une entrée d'eau 5, un échangeur de chaleur 6, par exemple du type chaudière ou bouilleur, dans le cas d'une installation pour l'eau chaude, des tubes métalliques 7 pour la circulation en boucle de l'eau sanitaire et des dérivations 8 qui permettent d'acheminer l'eau sanitaire jusqu'à des points d'eau 9 prévus pour les utilisateurs.

Dans le cas d'une installation pour l'eau froide, l'échangeur de chaleur 6 peut de manière avantageuse être remplacé par une réserve d'eau froide.

Le groupe de traitement 3 comprend un dispositif de mesure de débit d'eau 10, un dispositif d'alimentation en produit de traitement 15 relié au dispositif de mesure de débit d'eau 10 par un câble électrique 14, un tube d'alimentation 16, une vanne anti-retour 17 et une connexion 18 qui assure le raccordement du groupe de traitement 3 sur le circuit de circulation d'eau sanitaire 2. Le dispositif d'alimentation en produit de traitement 15 comprend un réservoir 19 qui contient un produit de traitement 20, une pompe avec unité de commande 21 et une crépine d'aspiration 22. Deux vannes 11, 12 sont disposées de part et d'autre du dispositif de mesure de débit d'eau 10 afin de pouvoir l'isoler.

Chaque dispositif de contrôle 4 comprend deux connexions 23, 24, une vanne by-pass 25, un tube témoin 26, par exemple en forme de U et deux vannes 27, 28 aux extrémités du tube témoin.

De façon davantage détaillée, l'emplacement du groupe de traitement doit être choisi de manière à satisfaire divers critères de conformité, notamment aux normes en vigueur en termes de sécurité de l'alimentation électrique et d'hygiène, des critères de commodité d'accès pour le nettoyage et la maintenance et divers critères permettant de garantir la fiabilité et la précision de son fonctionnement, en faisant en sorte par exemple qu'il ne soit pas soumis à des perturbations induites par la présence à proximité d'une source de chaleur ou d'une prise d'air basse.

Le groupe de traitement 3 a pour fonction de permettre le dosage et l'injection du produit de traitement selon une quantité déterminée comme décrit ci-après dans le circuit de circulation d'eau sanitaire 2. Ce dispositif doit être inviolable et insensible aux variations de la pression d'eau qui circule dans le circuit de circulation d'eau sanitaire 2 d'une part afin d'assurer la sécurité du fonctionnement et d'autre part afin de garantir l'alimentation d'une quantité de produit de traitement déterminée en permanence de façon précise, indépendamment des perturbations de pression sur le circuit de circulation d'eau sanitaire 2.

Le dispositif de mesure de débit d'eau 10 détermine le débit de l'eau entrant dans l'installation d'eau sanitaire 1 du bâtiment et envoie cette information à l'unité de commande de la pompe 21. Le dispositif de mesure de débit d'eau 10 envoie un signal de commande après détermination du volume d'eau fixé en fonction de critères particuliers, tels que la qualité de l'eau, le titre hydrométrique d e l'eau, la concentration et les propriétés du produit de traitement, l'importance de l'installation sanitaire à traiter et les matériaux du circuit de circulation d'eau sanitaire 2. Au signal de commande, le dispositif d'alimentation en produit de traitement 15 prélève par pompage dans le réservoir 19 la quantité calculée de produit de traitement par l'intermédiaire de la crépine d'aspiration 22 qui joue le rôle de moyen d'aspiration, de filtrage et de contact de niveau. Le produit de traitement aspiré, filtré et prélevé selon la quantité calculée est acheminé, sous l'effet de l'action de pompage réalisée par la pompe avec unité de commande 21, jusqu'au circuit de circulation d'eau sanitaire 2 dans lequel il est injecté. L'eau sanitaire, à laquelle du produit de traitement a été ajouté de façon proportionnelle à son débit, poursuit ensuite sa circulation dans le circuit de circulation d'eau sanitaire 2.

De préférence, les doses maximales de silicates de sodium du produit de traitement injectées dans le circuit de circulation d'eau sanitaire ne dépassent pas 10 milligrammes par litre pour les eaux sanitaires chaudes et 5 milligrammes par litre pour les eaux sanitaires froides.

Le dispositif de mesure de débit d'eau 10 comprend un compteur avec tête émettrice d'impulsions à lecture directe, monté sans by-pass entre les deux vannes d'isolement 11, 12. La tête émettrice d'impulsions émet des impulsions de comptage en réponse au débit d'eau sanitaire effectif et ces impulsions sont envoyées sur le dispositif d'alimentation en produit de traitement 15. Le dispositif d'alimentation en produit de traitement 15 a été réglé par approximations successives lors de l'étape de mise en service du groupe de traitement de manière à alimenter de préférence entre 110 et 120 millilitres de produit de traitement par mètre cube d'eau, à la contre pression effective du circuit de circulation d'eau sanitaire 2. En fonction des impulsions de comptage qu'il reçoit, lesquelles sont donc l'expression du débit d'eau sanitaire entrant dans le circuit de circulation d'eau sanitaire 2, le dispositif d'alimentation en produit de traitement 15 alimente par conséquent dans le circuit de circulation d'eau sanitaire 2 une quantité de produit de traitement qui est proportionnelle au volume d'eau à traiter qui circule dans le circuit de circulation d'eau sanitaire 2.

De manière avantageuse, le calibre du compteur est choisi de manière à correspondre au diamètre de l'entrée d'eau générale afin d'assurer une bonne sensibilité dans la plage des débits de fonctionnement du circuit de circulation d'eau sanitaire et afin d'éviter l'absence de production d'impulsions par exemple lors de faibles soutirages d'eau sanitaire. De manière avantageuse également, un relais temporisé avec dispositif de proportionnalité peut être prévu afin de permettre le maintien de la commande du dispositif d'alimentation en produit de traitement 15 pendant un temps réglable quand le volume d'eau qui s'écoule entre deux impulsions de comptage successives est important.

Le dispositif d'alimentation en produit de traitement 15 peut comprendre une pompe doseuse classique qui répond aux impulsions de comptage précitées pour alimenter une quantité de produit de traitement proportionnelle à ces impulsions et réglable.

Le réservoir 19 comprend un bac de qualité alimentaire et inviolable sans destruction. Pendant toute la durée de l'exploitation, la quantité de produit de traitement stockée dans le réservoir 19 doit être suffisante pour couvrir la consommation en produit de traitement entre deux visites de suivi d'exploitation, telle que déterminée lors de la visite de contrôle réalisée au terme de l'étape de traitement de choc. Si la quantité de produit de traitement stockée dans le réservoir 19 devait descendre au dessous d'un niveau d'alerte prédéfini du fait d'une négligence ou de toute autre raison (par exemple le dysfonctionnement de l'un des composants du groupe de traitement 3), la crépine d'aspiration 22 le détecterait.

Une vanne anti-retour disposée dans la pompe doseuse a pour fonction d'empêcher que le produit de traitement 20 qui est aspiré depuis le réservoir 19 dans le tube d'alimentation 16 par la crépine d'aspiration 22 jusqu'à la connexion au niveau de laquelle il est injecté dans le circuit de circulation d'eau sanitaire 2 ne retourne dans le réservoir 19.

La deuxième vanne anti-retour 17 est disposée à une certaine distance de la connexion 18 avec le circuit de circulation d'eau sanitaire afin d'éviter la cristallisation du produit de traitement dans le tube d'alimentation 16 en raison de la température élevée de l'eau chaude circulant dans le circuit.

Les dispositifs de contrôle 4 ont pour fonction de permettre l'analyse de l'état de corrosion, d'oxydation et/ou de dépôt du circuit de circulation d'eau sanitaire 2 après son traitement à l'aide du produit de traitement 20 dosé et injecté par l'intermédiaire du dispositif de mesure de débit d'eau 10 et du dispositif d'alimentation en produit de traitement 15. La vanne by-pass 25 permet de dériver la circulation de l'eau sanitaire dans le tube témoin 26, correspondant à l'opération normale de l'installation, et les deux vannes 27, 28 permettent d'isoler le tube témoin 26 afin de le démonter à des fins d'analyse.

Le principe des tubes témoins constitue une méthode d'analyse très fiable de l'état de corrosion, d'oxydation et/ou de dépôts d'un circuit de circulation de fluide, sans perturber la circulation d'eau sanitaire dans le bâtiment.

Les dispositifs de contrôle sont implantés de façon répartie sur le circuit de circulation d'eau sanitaire 2 pour assurer une analyse la plus précise possible de l'état du circuit de circulation et de préférence, on a au moins un dispositif de contrôle après la connexion 18 du tube d'alimentation 16, au début du circuit 2, et au moins un autre dispositif de contrôle à la fin du circuit avant l'échangeur de chaleur.

La nature constitutive des tubes est la plus représentative possible de celle du circuit de circulation, notamment en termes de matériau, d'état de vétusté, de corrosion, d'oxydation et/ou de dépôts, par exemple en faisant en sorte que ces tubes témoins soient composés pour partie de tubes d'origine et pour partie de tubes neufs.

D'autre part, les implantations des dispositifs de contrôle sont de manière à ne pas perturber ou modifier les caractéristiques de fonctionnement du circuit de circulation d'eau sanitaire 2, telles que la création de points bas au niveau desquels une sédimentation accélératrice de la corrosion peut se produire, augmentant les pertes de charge.

Afin de faciliter l'accès aux tubes témoins pour leur vérification périodique pendant l'étape d'exploitation, les tubes témoins sont de préférence facilement reconnaissables, tel que s'ils sont non calorifugés et peints d'une couleur vive.

Afin de faciliter l'analyse des tubes témoins, il est avantageux qu'ils puissent être aisément démontés. A cette fin, ils sont de préférence composés d'une partie droite et d'un coude et les vannes 28 destinées à les isoler en vue de leur démontage doivent être étanches et ne pas générer de coups de bélier. En outre, les risques d'aspersion lors du démontage peuvent être évités en prévoyant par exemple un point de prélèvement 29 à proximité du dispositif de contrôle.

Le groupe de traitement 3 est mis en place de manière à faire partie intégrante du circuit de circulation d'eau sanitaire 2. Il est destiné à rester en place pendant la totalité de la durée de vie en fonctionnement du circuit de circulation d'eau sanitaire. Une fois mis en place et au-delà de sa mise en service et de son étalonnage, le groupe de traitement est destiné à fonctionner en permanence pour assurer un traitement préventif permanent pendant le fonctionnement du circuit de circulation d'eau sanitaire sans qu'il soit nécessaire d'interrompre celui-ci pour quelque raison que ce soit liée au groupe de traitement lui-même. De manière avantageuse, le groupe de traitement peut également servir au traitement ponctuel destructif de corrosion et des dépôts, par exemple au début de sa mise en service dans une ancienne installation d'eau sanitaire.

L'analyse d'éléments chimiques tels que les silicates, le fer total, le pH et le degré hydrotimétrique ou TH de l'eau sanitaire qui circule dans le circuit de circulation d'eau sanitaire 2 permet de conforter et d'affiner les résultats obtenus à l'issue de l'analyse des tubes témoins. A cet effet, le circuit comprend des points de prélèvement 29, 30, 31 répartis de manière à permettre le prélèvement d'échantillons d'eau à différentes phases du traitement par le produit de traitement. De préférence, un point de prélèvement d'entrée 31 est implanté juste avant l'échangeur de chaleur 6, de manière à permettre le prélèvement pour analyse de l'eau non encore traitée. Un point de prélèvement de départ 30 situé après le dispositif de contrôle 4 qui est implanté après la connexion 18, suivant le sens de circulation du produit de traitement, permet le prélèvement pour analyse de l'eau peu après l'injection du produit de traitement. Un point de prélèvement de retour 29 situé avant le dispositif de contrôle 4 qui est implanté avant l'échangeur de chaleur 6, toujours suivant le sens de circulation du produit de traitement, permet le prélèvement pour analyse de l'eau à la fin de sa circulation en boucle.

Le produit de traitement 20, pour une utilisation préventive, est de préférence une solution aqueuse à base de silicates de sodium et d'eau déminéralisée prêt à l'emploi. De préférence, le produit de traitement préventif comprend les caractéristiques suivantes:
- silicates exprimés en g/l de SiO₂ 73 g/l ± 7,3 g/l
- masse volumique à 20°C 1,07 g/cm³
- valeur pH, solution diluée à 1 % en volume = 10

Les silicates sont déposés en fines couches sur les parois des tubes de circulation sanitaires agissant comme film protecteur contre l'oxydation et les dépôts de calcaire et d'autres minerais. Ce produit a aussi un effet d'adoucissement par permutation sodique et déferrisation en concentration plus élevée. Pour éviter une cristallisation du produit de traitement et une bonne répartition du film protecteur sur le tubage du circuit d'eau, le point d'injection, c'est-à-dire la connexion 18, du produit de traitement se trouve en aval de l'échangeur de chaleur (plutôt qu'à l'entrée de l'eau froide dans l'installation), et on peut prévoir un thermostat entre l'échangeur 6 et la connexion 18, par exemple à la position intermédiaire 32, pour s'assurer que la température d'eau chaude ne dépasse 60°C.

Dans le cas d'une installation d'eau sanitaire 1 préexistante sur laquelle l'appareil de traitement décrit précédemment est nouvellement installé, le procédé de traitement se décomposera en trois étapes : une première étape de diagnostic permettant de déterminer le degré de corrosion, d'oxydation et de dépôts dans le circuit de circulation d'eau sanitaire 2, une seconde étape de mise en oeuvre d'un traitement destructif de la corrosion, de l'oxydation et des dépôts et une troisième étape de mise en oeuvre d'un traitement préventif pour empêcher la formation de ces mêmes éléments. Dans le cas où l'appareil de traitement est installé lors de la mise en place de l'installation d'eau sanitaire 1, seule la troisième étape sera mise en oeuvre. Les deuxième et troisième étapes peuvent bien entendu être entrecoupées par des phases de réglage permettant d'ajuster la quantité de produit de traitement en fonction des résultats de traitement obtenus, tel qu'en effectuant des contrôles au niveau des tubes témoins et/ou des points de prélèvement d'échantillon.

Pour la mise en service du groupe de traitement, on passe par une étape de réglage en tenant compte du fonctionnement du compteur et du nombre réel d'impulsions d'injection délivrées par la pompe à chaque impulsion du compteur. A cet effet, on place la crépine d'aspiration 22 dans une éprouvette graduée remplie d'une quantité déterminée du produit de traitement 20 et on provoque un nombre connu d'impulsions, manuellement ou par chasse d'eau sur le réseau. Le rapprochement entre la quantité de produit aspiré et le volume en m³ d'eau correspondant au nombre d'impulsions effectives permet, par approximations successives, d'obtenir un réglage de la pompe à la contre-pression effective du réseau. Les consignes de fonctionnement et les conditions de mise en service peuvent être notées par écrit sur une fiche prévue à cet effet.

On peut également effectuer "un traitement de choc" lors de la première mise en route de l'installation, pendant une durée de trois mois, au cours de laquelle on soutire chaque jour un minimum de 10% de la capacité du circuit d'eau sanitaire. Au terme des trois mois, on effectue un contrôle pour
- relever les indexes des compteurs de consommation du produit;
- calculer la dose moyenne de traitement faisant le rapport entre la quantité des produits consommés dans le bac et la consommation d'eau affichée par le compteur;
- s'assurer que la quantité du produit stocké peut couvrir la consommation de l'installation entre deux visites de suivi;
- effectuer les analyses de l'eau du circuit d'eau chaude et/ou d'eau froide sanitaire en début et fin de traitement;
- vérifier la fonction du groupe en provoquant un rinçage de l'installation d'eau chaude et/ou d'eau froide sanitaire;
- modifier éventuellement les réglages.

On consigne enfin ces résultats de vérification sur une fiche prévue à cet effet.

Le suivi de maintenance par la suite comprend par exemple une visite tous les trois mois pour effectuer les contrôles suivants:
- analyse de la teneur d'eau (dosage de silicate, dosage en fer total, dosage de Ph, dosage du TH)
- vérification visuelle des tubes témoins.

On consigne ces éléments de contrôle dans un document prévu à cet effet, ce qui permet de prévoir une périodicité de la vérification des tubes témoins et de la réduire, le cas échéant, à une à deux vérifications annuelles après la première année de fonctionnement du groupe de traitement.

## Revendications

1. Procédé de traitement préventif de la corrosion, de l'oxydation et/ou de dépôts dans des circuits de circulation d'eau sanitaire, comprenant les étapes de :
- diagnostic comportant une analyse d'éléments chimiques de l'eau circulant dans ledit circuit par prélèvement d'eau circulant dans ledit circuit; et
- traitement préventif de la corrosion, de l'oxydation et/ou de dépôts dudit circuit d'eau sanitaire par la mise en service d'un groupe de traitement injectant un produit de traitement,
**caractérisé en ce que**
- l'étape de diagnostic comporte une analyse de l'état de corrosion, de l'oxydation et de dépôts du circuit de circulation d'eau sanitaire, et **en ce que** le groupe de traitement (3) mesure le débit d'eau entrant dans le circuit de circulation d'eau sanitaire (2),
et **en ce que** le produit de traitement comprend des silicates, la quantité de produit injecté étant proportionnelle au volume d'eau entrant dans le circuit de circulation d'eau sanitaire ainsi qu'à la quantité d'éléments chimiques de l'eau circulant dans ledit circuit relevée lors de la phase de diagnostic, la quantité maximum de produit injecté ne dépassant pas une valeur fixée par les normes alimentaires.

2. Procédé selon la revendication 1, **caractérisé en ce que** ladite étape de diagnostic de l'état de corrosion ou d'oxydation est effectuée par découpe témoin d'un échantillon de tuyauterie dudit circuit de circulation d'eau sanitaire.

3. Procédé selon lune des revendications 1 ou 2, **caractérisé en ce que** ladite étape d'analyse de la qualité de l'eau est effectuée par recherche des éléments chimiques suivants : fer total, pH et TH, respectivement le titre hydrotimétrique.

4. Procédé selon la revendication 1, **caractérisé en ce que** ladite phase de mise en service comprend une étape de traitement de choc comprenant un soutirage journalier d'une capacité d'eau d'environ 10% ou plus dudit circuit de circulation d'eau sanitaire, précédé et suivi d'une analyse des éléments chimiques de l'eau circulant dans ledit circuit.

5. Procédé selon la revendication 4, **caractérisé en ce que** la durée du traitement de choc est de 3 mois.

6. Procédé selon la revendication 4, **caractérisé en ce que** l'analyse des éléments chimiques comprend la détermination des silicates, fer total, pH et TH, respectivement le titre hydrotimétrique.

7. Procédé selon la revendication 1, **caractérisé en ce que** les doses maximales de silicates de sodium du produit de traitement préventif injectées dans le circuit d'eau sanitaire sont respectivement de 10 milligrammes par litre pour des eaux sanitaires chaudes et de 5 milligrammes par litre pour des eaux sanitaires froides.

8. Procédé selon l'une des revendications précédentes,
**caractérisé en ce que** l'on contrôle la température de l'eau chaude sanitaire, à un point intermédiaire (32) entre le point d'injection du produit de traitement dans le circuit et l'échangeur de chaleur (6) pour maintenir la température de l'eau chaude à une température maximum de 60°C.

9. Procédé de traitement selon l'une des revendications précédentes, **caractérisé en ce que** l'on installe un dispositif de contrôle (4) dans le circuit d'eau sanitaire, comprenant un tube témoin (26) formé d'un tube ayant une partie avec des caractéristiques de diamètre, de matériau et d'usure similaires aux tuyaux du circuit de circulation d'eau sanitaire.

10. Dispositif pour la mise en oeuvre d'un procédé de traitement préventif de la corrosion, de l'oxydation et ou de dépôts dans des circuits de circulation d'eau sanitaire comprenant :
- des moyens d'analyse d'éléments chimiques de l'eau circulant dans le circuit,
- un groupe de traitement d'eau sanitaire (3) comprenant des moyens (21, 16, 18) pour injecter un produit de traitement et un réservoir (19) pour contenir un produit de traitement (20),
**caractérisé en ce qu'**il comprend des moyens d'analyse de l'état de corrosion, de l'oxydation et de dépôts du circuit de circulation d'eau sanitaire (4),
et **en ce que** le groupe de traitement d'eau sanitaire (3), comprend en outre un dispositif de mesure de débit (10) convenant pour être monté sur une entrée d'eau d'un circuit de circulation d'eau sanitaire (2) d'un bâtiment, une pompe avec unité de commande (21) connectée électriquement au dispositif de mesure de débit et un tube d'alimentation (16) du produit de traitement convenant pour être connecté à un point de connexion (18) avec le circuit de circulation d'eau sanitaire (2), la pompe avec unité de commande (21) étant réglée de manière à pouvoir injecter le produit de traitement selon une quantité proportionnelle au volume d'eau entrant dans le circuit de circulation d'eau sanitaire, la quantité maximum de produit de traitement injecté étant inférieure à une valeur limite fixées par les normes alimentaires et de santé.

11. Dispositif selon la revendication 10,
**caractérisé en ce que** le tube d'alimentation (16) du produit de traitement comprend une vanne antiretour (17) disposée sur une portion dudit tube d'alimentation éloignée du point de connexion (18) avec le circuit de circulation d'eau sanitaire.

12. Dispositif selon l'une des revendications 10 ou 11, **caractérisé en ce que** le dispositif de mesure de débit (10) comprend un compteur à impulsions qui fournit un signal de commande à impulsions, le nombre d'impulsions étant proportionnel à un volume d'eau entrant dans le circuit de circulation d'eau sanitaire.

13. Dispositif selon l'une des revendications 10 à 12, **caractérisé en ce que** le réservoir (19) du produit de traitement est hermétiquement fermé et de qualité alimentaire, la fermeture étant inviolable sans destruction.

14. Utilisation d'un dispositif selon l'une des revendications 10 à 13 dans un bâtiment comprenant un circuit d'eau de circulation sanitaire (2) et un ou plusieurs dispositifs de contrôle (4) comprenant une vanne by-pass (25) et un tube témoin (26) en dérivation autour de la vanne by-pass.

15. Utilisation d'un dispositif selon la revendication 14, **caractérisée en ce que** le tube témoin est branché par des connexions (24) autour de la vanne by-pass (25) et comprend des vannes d'isolement (27,28) à chaque extrémité du tube témoin (26) pour permettre la démontage et contrôle du tube témoin sans interruption de la circulation d'eau dans le circuit (2).

16. Utilisation d'un dispositif selon l'une des revendications 14 ou 15, **caractérisée en qu'**il y a au moins un dispositif de contrôle au début du circuit en aval du point de connexion (18) du tube d'alimentation (16) du produit de traitement avec le circuit.

17. Utilisation d'un dispositif selon la revendication 16, **caractérisée en qu'**il y a au moins un dispositif de contrôle (4) disposé en fin de circuit.

18. Utilisation d'un dispositif selon l'une des revendications 14 à 17, **caractérisée en que** le point de connexion (18) du tube d'alimentation (16) du groupe de traitement (3) est disposé en aval d'un échangeur de chaleur (6).

## Claims

1. A method for preventive treatment of corrosion, of oxidation, and/or of deposits in service water flow circuits, comprising the steps of:
- diagnosis including an analysis of chemical elements of the water flowing in said circuit by sampling flowing water in said circuit ; and
- preventive treatment of corrosion, oxidation and/or deposits of said service water circuit by operating a treatment unit injecting a treatment product,
**characterized in that**
- the diagnostic step includes an analysis of the state of corrosion, oxidation and of deposits in the service water flow circuit, and **in that** the treatment group (3) measures the water flow rate entering the service water flow circuit (2);
and **in that** the treatment product comprises silicates, the amount of injected product being proportional to the volume of water entering the service water flow circuit as well as to the amount of chemical elements of the water flowing in said circuit, read during the diagnostic phase, the maximum amount of injected product not exceeding a value set by food standards.

2. The method according to claim 1, **characterized in that** said step for diagnosing the state of corrosion or oxidation is carried out by a control cut-out of a sample of tubing of said service water flow circuit.

3. The method according to any of claims 1 or 2,
**characterized in that** said step for analyzing the quality of the water is carried out by searching for the following chemical elements: total iron, pH and HT, the hydrotimetric titre respectively.

4. The method according to claim 1, **characterized in that** said operating phase comprises a shock treatment step comprising daily drawing-off of a water capacity of about 10% or more of said service water flow circuit, preceded and followed by an analysis of the chemical elements of the water flowing in said circuit.

5. The method according to claim 4, **characterized in that** the shock treatment duration is 3 months.

6. The method according to claim 4, **characterized in that** the analysis of the chemical elements comprises the determination of the silicates, total iron, pH and HT, the hydrotimetric titre respectively.

7. The method according to claim 1, **characterized in that** the maximum sodium silicate doses of the preventive treatment products, injected into the service water circuit are 10 milligrams per litre for hot service waters and 5 milligrams per litre for cold service waters, respectively.

8. The method according to any of the preceding claims, **characterized in that** the temperature of the hot service water is controlled at an intermediate point (32) between the injection point of the treatment product into the circuit and the heat exchanger (6) for maintaining the temperature of the hot water at a maximum temperature at 60°C.

9. The treatment method according to any of the preceding claims, **characterized in that** a control device (4) is installed in the service water circuit, comprising a control tube (26) formed by a tube having a portion with diameter, material and wear characteristics similar to those of tubes of the service water flow circuit.

10. A device for applying a method for preventive treatment of corrosion, oxidation and/or deposits in service water flow circuits comprising:
- means for analyzing chemical elements of the water flowing in the circuit,
- a service water treatment unit (3) comprising means (21,16,18) for injecting a treatment product and a tank (19) for containing a treatment product (20),
**characterized in that** it comprises means for analyzing the state of corrosion, oxidation and of deposits of the service water flow circuit (4),
and **in that** the service water treatment unit (3) further comprises a device for measuring the flow rate (10), suitable for being mounted on a water inlet of a service water flow circuit (2) of a building, a pump with a control unit (21) electrically connected to the flow rate measuring device and a treatment product supply tube (16) suitable for being connected to a connection point (18) with the service water flow circuit (2), the pump with a control unit (21) being adjusted so as to be able to inject the treatment product according to an amount proportional to the volume of water entering in the service water flow circuit, the maximum amount of the injected treatment product being less than a limiting value set by food and health standards.

11. The device according to claim 10, **characterized in that** the tube (16) for supplying the treatment product comprises an anti-return valve (17) positioned on a portion of said supply tube away from the connection point (18) with the service water flow circuit.

12. The device according to claim 10 or 11, **characterized in that** the flow rate measurement device (10) comprises a pulse counter which provides a pulsed control signal, the number of pulses being proportional to a volume of water entering the service water flow circuit.

13. The device according to any of claims 10 to 12, **characterized in that** the tank (19) of the treatment product is sealed and of food contact quality, the seal being tamper-proof unless destroyed.

14. The use of a device according to any of claims 10 to 13 in a building comprising a service water flow circuit (2) and one or more control devices (4) comprising a bypass valve (25) and a bypass control tube (26) around the bypass valve.

15. The use of a device according to claim 14,
**characterized in that** the control tube is connected through connections (24) around the bypass valve (25) and comprises isolation valves (27,28) at each end of the control tube (26) so that the control tube may be disassembled and examined without interrupting the water flow in the circuit (2).

16. The use of a device according to any of claims 14 or 15, **characterized in that** there is at least one control device at the beginning of the circuit downstream from the connection point (18) of the treatment product supply tube (16) with the circuit.

17. The use of a device according to claim 16,
**characterized in that** there is at least one control device (4) positioned at the end of the circuit.

18. The use of a device according to any of claims 14 to 17, **characterized in that** the connection point (18) of the supply tube (16) of the treatment unit (3) is positioned downstream from a heat exchanger (6).

## Patentansprüche

1. Verfahren zur vorbeugenden Behandlung von Korrosion, Oxidation und/ oder Ablagerungen in Brauchwasserkreisläufen mit den Schritten:
- Diagnose, eine Analyse der chemischen Elemente des in diesem Kreis umlaufenden Wassers durch Entnahme von in diesem Kreis umlaufenden Wasser umfassend; und
- vorbeugende Behandlung der Korrosion, Oxidation und/oder Ablagerungen im Brauchwasserkreislauf durch die Inbetriebnahme eines Behandlungsblocks, der ein Behandlungsprodukt einspritzt,
**dadurch gekennzeichnet, dass**
- der Diagnoseschritt eine Analyse des Zustandes der Korrosion, der Oxidation und der Ablagerungen im Brauchwasserkreislauf umfasst, und **dadurch**, dass der Behandlungsblock (3) den Wasserdurchsatz misst, der in den Brauchwasserkreislauf (2) eintritt,
und **dadurch**, dass das Behandlungsprodukt Silicate umfasst, wobei die Menge des eingespritzten Produkts dem in den Brauchwasserkreislauf eintretenden Wasservolumen sowie der Menge der chemischen Elemente des in diesem Kreis umlaufenden Wassers proportional ist, die während des Diagnoseschritts ermittelt worden ist, wobei die Höchstmenge des eingespritzten Produkts einen durch die Lebensmittelnormen festgelegten Wert nicht überschreitet.

2. Verfahren nach Anspruch 1, **dadurch gekennzeichnet, dass** der Schritt der Diagnose des Zustandes der Korrosion oder Oxidation durch Herausschneiden eines Rohrmusters als Kontrolle aus dem Brauchwasserkreislauf erfolgt.

3. Verfahren nach einem der Ansprüche 1 oder 2, **dadurch gekennzeichnet, dass** der Schritt der Analyse der Wasserqualität durch eine Suche nach den folgenden chemischen Elementen erfolgt: Gesamteisen, pH und TH bzw. Wasserhärte.

4. Verfahren nach Anspruch 1, **dadurch gekennzeichnet, dass** die Phase der Inbetriebsetzung einen Schritt der Stossbehandlung umfasst, der eine tägliche Entnahme eines Wasservolumens von etwa 10 % oder mehr aus dem Brauchwasserkreislauf umfasst und dem eine Analyse der chemischen Elemente des in diesem Kreis umlaufenden Wassers vorausgeht und folgt.

5. Verfahren nach Anspruch 4, **dadurch gekennzeichnet, dass** die Dauer der Stossbehandlung drei Monate beträgt.

6. Verfahren nach Anspruch 4, **dadurch gekennzeichnet, dass** die Analyse der chemischen Elemente die Bestimmung der Silicate, des Gesamteisens, des pH-Wertes und des TH-Wertes bzw. der Wasserhärte umfasst.

7. Verfahren nach Anspruch 1, **dadurch gekennzeichnet, dass** die höchsten Dosen von Natriumsilicaten aus dem in den Brauchwasserkreis eingespritzten Produkt zur vorbeugenden Behandlung 10 Milligramm pro Liter für heisses Brauchwasser und 5 Milligramm pro Liter für kaltes Brauchwasser betragen.

8. Verfahren nach einem der vorangehenden Ansprüche, **dadurch gekennzeichnet, dass** die Temperatur des heissen Brauchwassers an einem Punkt (32) überwacht wird, der zwischen dem Punkt der Einspritzung des Behandlungsprodukts in den Kreislauf und dem Wärmetauscher (6) liegt, um die Temperatur des heissen Wassers bei einer Höchsttemperatur von 60 °C zu halten.

9. Verfahren zur Behandlung nach einem der vorangehenden Ansprüche,
**dadurch gekennzeichnet, dass** im Brauchwasserkreis eine Kontrollvorrichtung (4) installiert wird, die ein Kontrollrohr (26) umfasst, das aus einem Rohr gebildet wird, das einen Abschnitt mit Eigenschaften von Durchmesser, Werkstoff und Verschleiss besitzt, die denen der Rohre des Brauchwasserkreislaufes ähnlich sind.

10. Vorrichtung für die Umsetzung eines Verfahrens zur vorbeugenden Behandlung von Korrosion, Oxidation und oder Ablagerungen in Brauchwasserkreisläufen mit:
- Mitteln für die Analyse von chemischen Elementen des im Kreis umlaufenden Wassers,
- einem Brauchwasserbehandlungsblock (3) mit Mitteln (21, 16, 18), um ein Behandlungsprodukt einzuspritzen, sowie mit einem Tank (19), um Behandlungsprodukt (20) zu speichern,
**dadurch gekennzeichnet, dass** sie Mittel für eine Analyse des Zustandes der Korrosion, Oxidation und Ablagerungen im Brauchwasserkreislauf (4) umfasst, und **dadurch**, dass der Brauchwasserbehandlungsblock (3) ausserdem eine Vorrichtung (10) zur Messung des Durchsatzes umfasst, die dafür geeignet ist, an einem Wassereintritt eines Brauchwasserkreislaufes (2) eines Gebäudes angebracht zu werden, ferner eine Pumpe mit einer Steuereinheit (21), die elektrisch an die Durchsatzmessvorrichtung angeschlossen ist, sowie ein Speiserohr (16) für das Behandlungsprodukt, das dafür geeignet ist, an einem Verbindungspunkt (18) an den Brauchwasserkreislauf (2) angeschlossen zu werden, wobei die Pumpe mit der Steuereinheit (21) so eingestellt wird, dass das Behandlungsprodukt in einer Menge eingespritzt werden kann, die dem in den Brauchwasserkreislauf eintretenden Wasservolumen proportional ist, wobei die Höchstmenge des eingespritzten Behandlungsprodukts kleiner als ein Grenzwert ist, der durch die Lebensmittel- und Gesundheitsnormen festgelegt wird.

11. Vorrichtung nach Anspruch 10, **dadurch gekennzeichnet, dass** das Speiserohr (16) für das Behandlungsprodukt ein Rückschlagventil (17) umfasst, das an einem Abschnitt des Speiserohres angeordnet ist, der vom Verbindungspunkt (18) mit dem Brauchwasserkreislauf entfernt ist.

12. Vorrichtung nach einem der Ansprüche 10 oder 11, **dadurch gekennzeichnet, dass** die Vorrichtung (10) für die Messung des Durchsatzes einen Impulszähler umfasst, der Steuersignalimpulse liefert, wobei die Anzahl der Impulse einem in den Brauchwasserkreislauf eintretenden Wasservolumen proportional ist.

13. Vorrichtung nach einem der Ansprüche 10 bis 12, **dadurch gekennzeichnet, dass** der Tank (19) mit Behandlungsprodukt dicht verschlossen und von Lebensmittelqualität ist, wobei der Verschluss ohne Zerstörung nicht durchbrochen werden kann.

14. Verwendung einer Vorrichtung nach einem der Ansprüche 10 bis 13 in einem Gebäude mit einem Brauchwasserkreislauf (2) und einem oder mehreren Steuervorrichtungen (4), die ein Bypassventil (25) und ein Kontrollrohr (26) im Nebenschluss zum Bypassventil umfasst.

15. Verwendung einer Vorrichtung nach Anspruch 14, **dadurch gekennzeichnet, dass** das Kontrollrohr mit Verbindungen (24) um das Bypassventil (25) herum angeschlossen ist und an beiden Enden des Kontrollrohres (26) Isolierventile (27, 28) umfasst, um einen Ausbau und eine Prüfung des Kontrollrohres ohne Unterbrechung des Wasserkreislaufes im Kreis (2) zu erlauben.

16. Verwendung einer Vorrichtung nach einem der Ansprüche 14 oder 15,
**dadurch gekennzeichnet, dass** es zumindest eine Überwachungsvorrichtung am Anfang des Kreises stromab vom Verbindungspunkt (18) des Speiserohres (16) für das Behandlungsprodukt mit dem Kreis gibt.

17. Verwendung einer Vorrichtung nach Anspruch 16, **dadurch gekennzeichnet, dass** es zumindest eine Überwachungsvorrichtung (4) gibt, die am Ende des Kreises angeordnet ist.

18. Verwendung einer Vorrichtung nach einem der Ansprüche 14 bis 17, **dadurch gekennzeichnet, dass** der Verbindungspunkt (18) des Speiserohres (16) des Behandlungsblocks (3) stromab von einem Wärmetauscher (6) angeordnet ist.
